# EUROPEAN PATENT APPLICATION

(11) **EP 4 510 208 A1**
(43) Date of publication of application: **19.02.2025**
(21) Application number: 22954798.9
(22) Date of filing: 15.11.2022
(51) Int. Cl.: H01M 4/13, H01M 10/052, H01M 10/054

(54) **ELECTRODE ASSEMBLY, BATTERY CELL, BATTERY AND ELECTRIC DEVICE**

(30) Priority: 08.08.2022 CN 202210942572
(71) Applicant: Jiangsu Contemporary Amperex Technology Limited, Changzhou, Jiangsu 213300 (CN); Contemporary Amperex Technology Co., Limited, Ningde, Fujian 352100 (CN)
(72) Inventor: ZHONG, Qineng, hangzhou, Jiangsu 213300 (CN); SUN, Jiantong, hangzhou, Jiangsu 213300 (CN); LI, Ling, hangzhou, Jiangsu 213300 (CN); SONG, Shutao, hangzhou, Jiangsu 213300 (CN); ZHANG, Xiaoxi, hangzhou, Jiangsu 213300 (CN)
(74) Representative: Ran, Handong
(86) International application number: PCT/CN2022/131970
(87) International publication number: WO 2024/031859

(57) **Abstract**

The present application relates to an electrode assembly (232), a battery cell (20), a battery (100) and an electric device. The electrode assembly (232) comprises a positive electrode sheet (232a) and a negative electrode sheet (232b), which are alternately arranged. The side surfaces of at least one group of adjacent positive electrode sheets (232a) and negative electrode sheets (232b) that face each other are provided with engagement portions (P). The engagement portion (P) located on the positive electrode sheet (232a) and the engagement portion (P) located on the corresponding negative electrode sheet (232b) are configured to be capable of engaging with each other, so as to limit the degrees of freedom of adjacent positive electrode sheets (232a) and negative electrode sheets (232b). The engagement portion (P) located on the positive electrode sheet (232a) and the engagement portion (P) located on the negative electrode sheet (232b) are configured to extend in a preset direction, wherein the preset direction satisfies either one of the following conditions: the preset direction being parallel to the direction of height (H) of the electrode assembly (232), and the preset direction being set at an angle relative to the direction of height (H) of the electrode assembly (232) and not being perpendicular to the direction of height (H) of the electrode assembly (232).

## Description

### CROSS-REFERENCE TO RELATED APPLICATIONS

This application refers to China Patent Application No.202210942572.6, filed on August 8, 2022 and entitled "ELECTRODE ASSEMBLY, BATTERY CELL, BATTERY, AND ELECTRIC APPARATUS", which is incorporated herein by reference in its entirety.

### TECHNICAL FIELD

This application relates to the field of battery technologies, and in particular, to an electrode assembly, a battery cell, a battery, and an electric apparatus.

### BACKGROUND

When a battery is subjected to external force, excessive force may lead to dislocation of the positive and negative electrode plates, thus affecting reliability of the battery.

### SUMMARY

In a first aspect, according to embodiments of this application, an electrode assembly is provided, including a positive electrode plate and a negative electrode plate arranged alternately. At least one pair of adjacent positive electrode plate and negative electrode plate is provided with meshing parts on side surfaces facing each other. The meshing part on the positive electrode plate and the meshing part on the corresponding negative electrode plate are configured to be able to engage with each other, to restrict freedom of the adjacent positive electrode plate and negative electrode plate. The meshing part on the positive electrode plate and the meshing part on the corresponding negative electrode plate are configured to extend in a preset direction, where the preset direction is any one of the following: the preset direction being parallel to a height direction of the electrode assembly, and the preset direction being at an angle with the height direction of the electrode assembly, with the preset direction being not perpendicular to the height direction of the electrode assembly.

In some embodiments, in a thickness direction of the electrode assembly, cross-sectional area of the meshing part gradually decreases along a direction leaving the electrode plate on which the meshing part is located, from a side surface of the electrode plate on which the meshing part is located.

In some embodiments, in the thickness direction of the electrode assembly, the cross-sectional area of the meshing part linearly decreases along the direction leaving the electrode plate on which the meshing part is located, from the side surface of the electrode plate on which the meshing part is located.

In some embodiments, in the thickness direction of the electrode assembly, a cross-sectional shape of the meshing part is one of triangle, trapezoid, and arc.

In some embodiments, multiple meshing parts are provided on a same surface of a same electrode plate, and all the meshing parts are arranged continuously.

In some embodiments, multiple meshing parts are provided on a same surface of a same electrode plate, and all the meshing parts are arranged discontinuously.

In some embodiments, multiple meshing parts are provided on a same surface of a same electrode plate, and all the meshing parts are arranged on a first side of the electrode assembly, the first side being a side opposite a side of the electrode assembly for tab arrangement.

In some embodiments, at least one pair of adjacent positive electrode plate and negative electrode plate is provided with multiple recess parts recessed away from each other on side surfaces facing each other; and the meshing part is formed between adjacent ones of the recess parts on a same side surface of a same electrode plate.

In some embodiments, at least one pair of adjacent positive electrode plate and negative electrode plate is provided with an active layer on side surfaces facing each other; and the recess parts are correspondingly formed on the active layer.

In some embodiments, a ratio of a recess depth of the recess part to a thickness of the active layer is approximately 0.03 to approximately 0.1.

In some embodiments, the meshing part on the positive electrode plate is in clearance fit with the meshing part on the corresponding negative electrode plate.

In some embodiments, an assembly clearance between the meshing part on the positive electrode plate and the meshing part on the corresponding negative electrode plate is less than or equal to approximately 30 microns.

In a second aspect, according to embodiments of this application, a battery cell is provided, including a housing and a cell assembly accommodated in the housing. The cell assembly includes a separating member and the electrode assembly in any one of the foregoing embodiments, the separating member being disposed between the positive electrode plate and the negative electrode plate.

In some embodiments, a ratio of capacity per unit area of the negative electrode plate to capacity per unit area of the positive electrode plate is greater than or equal to approximately 1.

In some embodiments, the cell assembly is of a wound structure.

In some embodiments, the cell assembly is of a stacked structure.

In a third aspect, according to embodiments of this application, a battery is provided, including the battery cell in any one of the foregoing embodiments.

In a fourth aspect, according to embodiments of this application, an electric apparatus is provided, including the battery in any one of the foregoing embodiments, where the battery is configured to supply electrical energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

A person of ordinary skill in the art can clearly understand various other advantages and benefits by reading the detailed description of the embodiments below. The accompanying drawings are merely intended to illustrate the embodiments and are not intended to limit this application. In addition, in all the accompanying drawings, same parts are denoted by same reference signs. In the accompanying drawings:
FIG. 1 is a schematic structural diagram of a cell assembly according to some embodiments of the related art;
FIG. 2 is a cross-sectional view of FIG. 1 along A-A;
FIG. 3 is a cross-sectional view of FIG. 1 along B-B;
FIG. 4 is a schematic structural diagram of a vehicle according to some embodiments of this application;
FIG. 5 is a schematic exploded view of a battery according to some embodiments of this application;
FIG. 6 is a schematic exploded view of a battery cell according to some embodiments of this application;
FIG. 7 is a schematic structural diagram of a cell assembly according to some embodiments of this application;
FIG. 8 is a cross-sectional view of FIG. 7 along C-C according to some embodiments of this application;
FIG. 9 is a locally enlarged view of position G in FIG. 8;
FIG. 10 is a locally enlarged view of position F in FIG. 9;
FIG. 11 is a cross-sectional view of FIG. 7 along C-C according to some other embodiments of this application;
FIG. 12 is a locally enlarged view of position I in FIG. 11;
FIG. 13 is a locally enlarged view of position J in FIG. 12;
FIG. 14 is a cross-sectional view of FIG. 7 along C-C according to still some other embodiments of this application;
FIG. 15 is a locally enlarged view of position K in FIG. 14;
FIG. 16 is a locally enlarged view of position L in FIG. 15;
FIG. 17 is a locally enlarged view of position M in FIG. 15;
FIG. 18 is a schematic structural diagram of a positive electrode plate from one perspective according to some embodiments of this application;
FIG. 19 is a schematic structural diagram of a positive electrode plate from one perspective according to some other embodiments of this application;
FIG. 20 is a schematic structural diagram of a positive electrode plate from one perspective according to still some other embodiments of this application; and
FIG. 21 is a locally enlarged view showing mating between a positive electrode plate and a negative electrode plate according to some embodiments of this application.

The reference signs in the specific embodiments are as follows:
cell assembly 1, positive electrode plate 1a, negative electrode plate 1b, separator 1c, positive electrode tab 1d, negative electrode tab 1e;
vehicle 1000;
battery 100, controller 200, motor 300;
battery box 10, first portion 11, second portion 12;
battery cell 20, end cover 21, electrode terminal 21a, housing 22, cell assembly 23, separating member 231, electrode assembly 232;
positive electrode plate 232a, first current collector c1, first active layer a1, negative electrode plate 232b, second current collector c2, second active layer a2, positive electrode tab t1, negative electrode tab t2;
meshing part p, recess part q;
first side f1, second side f2;
recess depth h1, thickness h2;
width direction W, thickness direction δ, and height direction H.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of batteries, market demands for batteries are also expanding.

The inventors of this application have noticed that when a battery is subjected to external force, excessive force may lead to dislocation of the positive and negative electrode plates, thus affecting reliability of the battery.

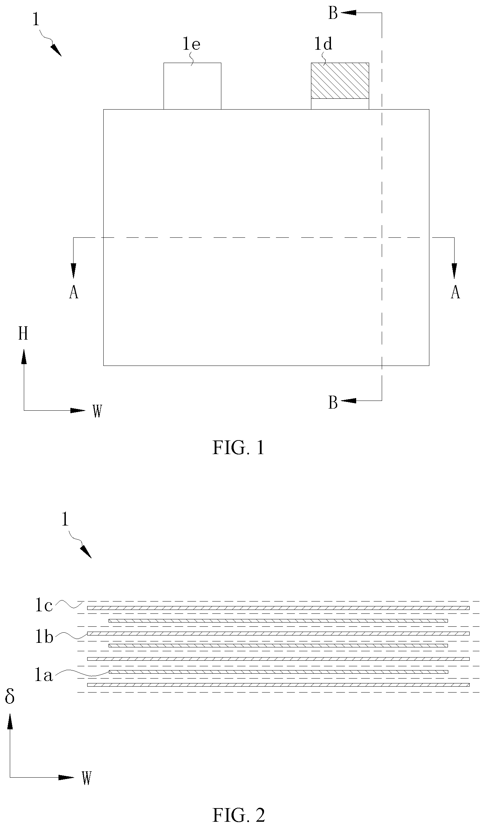

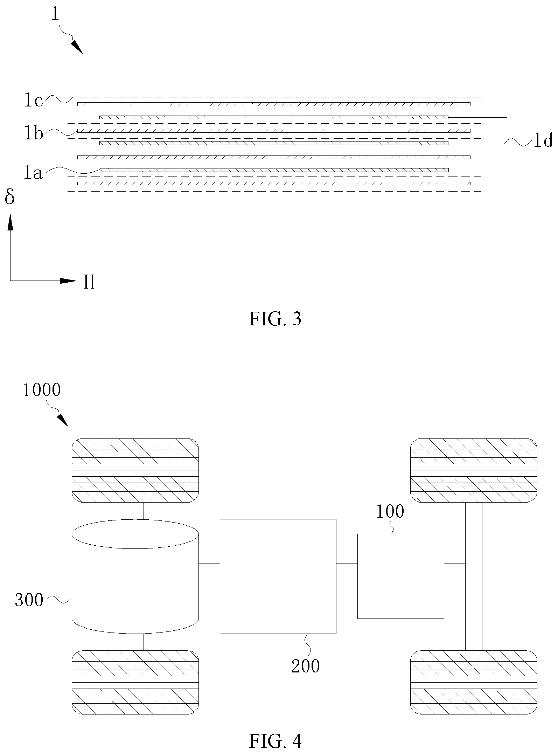

Refer to FIG. 1 to FIG. 3. FIG. 1 is a schematic structural diagram of a cell assembly 1 according to some embodiments of the related art, FIG. 2 is a cross-sectional view of FIG. 1 along A-A, and FIG. 3 is a cross-sectional view of FIG. 1 along B-B. Taking a stacked cell assembly 1 as an example, the cell assembly 1 includes a positive electrode plate 1a and a negative electrode plate 1b arranged alternately, a separator 1c disposed between the adjacent positive electrode plate 1a and negative electrode plate 1b, a positive electrode tab 1d disposed on the positive electrode plate 1a, and a negative electrode tab 1e disposed on the negative electrode plate 1b.

The inventors of this application have further noticed that as shown in FIG. 1, the positive electrode tabs 1d can be fastened by welding, and the negative electrode tabs 1e can also be fastened by welding. As shown in FIGs. 2 and 3, the stacked cell assembly 1 is not constrained in the width direction. As a result, when the cell assembly 1 is subjected to external force, relative slippage is likely to occur between the positive electrode plate 1a and the negative electrode plate 1b. This leads to misalignment in the stacked cell assembly 1, deteriorating battery performance, causing safety issues, and affecting battery reliability.

To alleviate the problem of decreased safety performance of the battery caused by relative slippage between the positive and negative electrode plates, the inventors of this application have conducted research and discovered that at least a binding force can be applied to the positive and negative electrode plates in the width direction. Specifically, structures that can cooperate with each other are added to the positive and negative electrode plates where relative slippage is likely to occur, so as to create effective support between the corresponding positive and negative electrode plates, thus preventing relative slippage between the positive and negative electrode plates when subjected to external force.

Based on the above considerations, to alleviate the problem of decreased safety performance of the battery caused by relative slippage between the positive and negative electrode plates, the inventors of this application have designed an electrode assembly through in-depth research. In the design, at least one pair of adjacent positive electrode plate and negative electrode plate is provided with meshing parts on side surfaces facing each other, where the corresponding meshing parts can be engaged with each other. When the battery is subjected to external force, the meshing parts engaged with each other can generate mutual forces between at least one pair of adjacent positive electrode plate and negative electrode plate to bind the positive electrode plate and negative electrode plate, preventing relative slippage between the positive electrode plate and the negative electrode plate under the influence of the external force. This can effectively avoid the problem of deteriorating battery performance due to misalignment of the positive and negative electrode plates, thus improving the reliability of the battery.

The electrode plate disclosed in the embodiments of this application is used for manufacturing battery cells. The battery cells can be used in, but not limited to, electric apparatuses such as vehicles, ships, or aircraft. The battery cell, battery, and the like disclosed in this application can be used to form a power system for the electric apparatus. This helps alleviate the problem of decreased battery performance caused by lithium precipitation, thus improving the stability and service life of the battery.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

Refer to FIG. 4. FIG. 4 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be provided at the bottom or head or tail of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

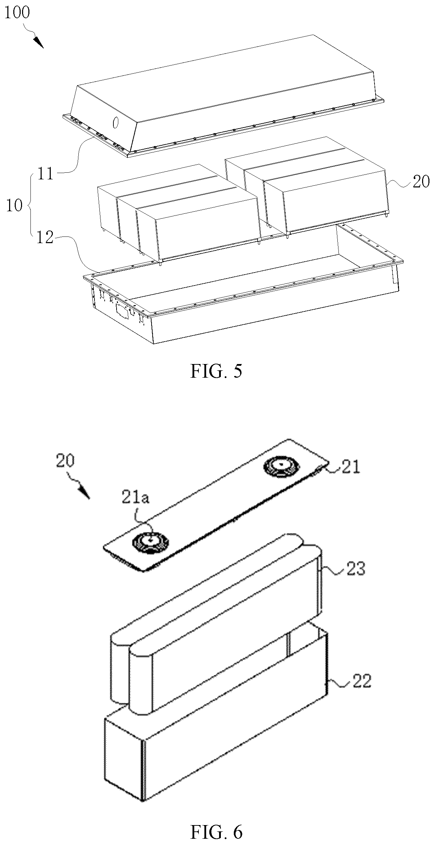

Refer to FIG. 5. FIG. 5 is an exploded view of a battery 100 according to some embodiments of this application. The battery 100 includes a battery box 10 and a battery cell 20, where the battery cell 20 is accommodated in the battery box 10. The battery box 10 is configured to provide an accommodating space for the battery cell 20. The battery box 10 may be of various structures. In some embodiments, the battery box 10 may include a first portion 11 and a second portion 12. The first portion 11 and the second portion 12 fit together so that the first portion 11 and the second portion 12 jointly define an accommodating space for accommodating the battery cell 20. The second portion 12 may be a hollow structure with one end open, and the first portion 11 may be a plate structure, where the first portion 11 covers the open side of the second portion 12 for the first portion 11 and the second portion 12 to jointly define an accommodating space; or the first portion 11 and the second portion 12 may both be hollow structures with one side open, where the open side of the first portion 11 is engaged with the open side of the second portion 12. Certainly, the battery box 10 formed by the first portion 11 and the second portion 12 may be of a variety of shapes, for example, cylinder or cuboid.

In the battery 100, the battery cell 20 may be present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the battery box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the battery box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

Referring to FIG. 6, FIG. 6 is a schematic exploded view of a battery cell 20 according to some embodiments of this application. The battery cell 20 refers to a smallest element constituting the battery 100. As shown in FIG. 6, the battery cell 20 includes an end cover 21, a housing 22, a cell assembly 23, and other functional components.

The end cover 21 is a component that covers an opening of the housing 22 to isolate an internal environment of the battery cell 20 from the external environment. A shape of the end cover 21 is not limited and may be adapted to a shape of the housing 22 to fit the housing 22. Optionally, the end cover 21 may be made of a material with specified hardness and strength (for example, aluminum alloy), so that the end cover 21 is less likely to deform when subjected to extrusion and collision, allowing the battery cell 20 to have higher structural strength and enhanced safety performance. Functional components such as an electrode terminal 21a may be provided on the end cover 21. The electrode terminal 21a may be configured to be electrically connected to the cell assembly 23 for outputting or inputting electrical energy of the battery cell 20. In some embodiments, the end cover 21 may further be provided with a pressure relief mechanism for releasing internal pressure when the internal pressure or a temperature of the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuit. For example, the insulator may be made of plastic, a rubber, or the like.

The housing 22 is an assembly configured to form the internal environment of the battery cell 20 together with the end cover 21, where the formed internal environment may be configured to accommodate the cell assembly 23, an electrolyte, and other components. The housing 22 and the end cover 21 may be separate components, an opening may be provided on the housing 22, and the end cover 21 covers the opening to form the internal environment of the battery cell 20. The end cover 21 and the housing 22 are not limited and may also be integrated. Specifically, the end cover 21 and the housing 22 may form a shared connection surface before other components are disposed inside the housing, and then the housing 22 is covered with the end cover 21 when inside of the housing 22 needs to be enclosed. The housing 22 may be of various shapes and sizes, such as a rectangular shape, a cylindrical shape, and a hexagonal prism shape. Specifically, the shape of the housing 22 may be determined according to a specified shape and size of the cell assembly 23. The housing 22 may be made of various materials, such as copper, iron, aluminum, stainless steel, aluminum alloy, and plastic, which are not particularly limited in the embodiments of this application.

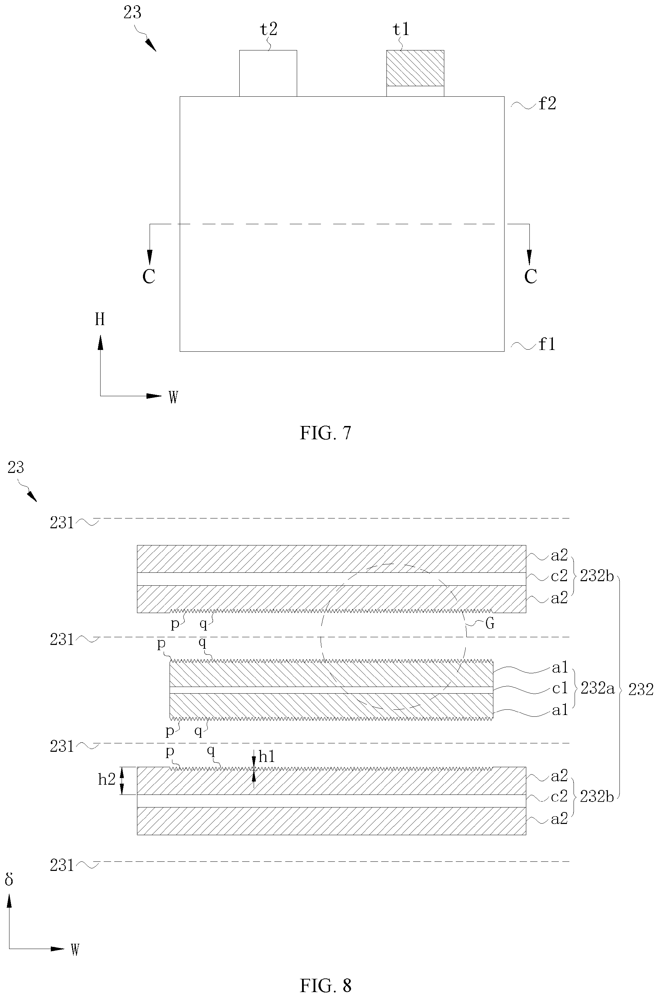

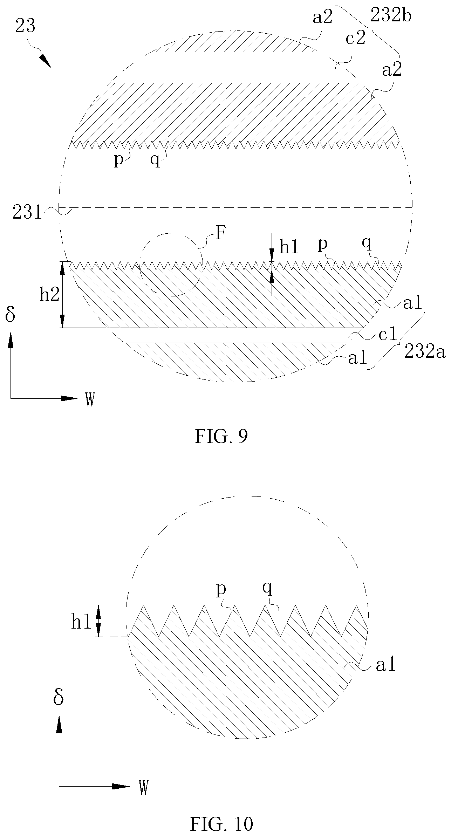

Refer to FIG. 7 to FIG. 10. FIG. 7 is a schematic structural diagram of the cell assembly 23 according to some embodiments of this application; FIG. 8 is a cross-sectional view of FIG. 7 along C-C according to some embodiments of this application; FIG. 9 is a locally enlarged view of position G in FIG. 8; and FIG. 10 is a locally enlarged view of position F in FIG. 9. W represents a width direction of the cell assembly 23, δ represents a thickness direction of the cell assembly 23, and H represents a height direction of the cell assembly 23. The cell assembly 23 is a component in which electrochemical reactions take place in the battery cell 100. The housing 22 may include one or more cell assemblies 23. The cell assembly 23 is mainly formed by winding or stacking a positive electrode plate 232a and a negative electrode plate 232b (the cell assembly 23 shown in FIGs. 7 to 10 is of a stacked structure), typically with a separating member 231 being disposed between the positive electrode plate 232a and the negative electrode plate 232b. The separating member 231 is configured to separate the positive electrode plate 232a from the negative electrode plate 232b, and prevent electrons in the battery cell 20 from freely passing through while allowing ions in the electrolyte to freely flow between the positive electrode plate 232a and the negative electrode plate 232b. The separating member 231 may be a film made of PE (polyethylene, polyethylene), PP (polypropylene, polypropylene) or other materials.

Parts of the positive electrode plate 232a and the negative electrode plate 232b that have active substances constitute a body portion of the cell assembly 23, while parts of the positive electrode plate 232a and the negative electrode plate 232b that have no active substances separately constitute a tab. The positive electrode tab t1 and the negative electrode tab t2 may be located at one end of the body portion or at two ends of the body portion respectively (as shown in FIGs. 7 to 10, the positive electrode tab t1 and the negative electrode tab t2 are located at one end of the body portion). During charge and discharge of the battery, a positive electrode active substance and a negative electrode active substance react with an electrolyte, and the tabs are connected to the electrode terminals to form a current loop.

According to some embodiments of this application, referring to FIGs. 8 to 10, and further referring to FIG. 7, this application provides an electrode assembly 232. The electrode assembly 232 includes a positive electrode plate 232a and a negative electrode plate 232b arranged alternately. At least one pair of adjacent positive electrode plate 232a and negative electrode plate 232b is provided with meshing parts p on side surfaces facing each other. The meshing part p located on the positive electrode plate 232a and the meshing part p located on the corresponding negative electrode plate 232b are configured to be able to engage with each other, to restrict freedom of the adjacent positive electrode plate 232a and negative electrode plate 232b.

Taking FIG. 8 to FIG. 10 as an example, the meshing parts p are provided on two opposite surfaces of the positive electrode plate 232a in the thickness direction δ. Of the two negative electrode plates 232b adjacent to the positive electrode plate 232a, the meshing part p is provided on a side surface of each of the two negative electrode plates 232b facing the positive electrode plate 232a. The meshing part p can be correspondingly disposed in combination with the stress situation in the actual working condition, which is not specifically limited in the embodiments of this application.

It should be noted that "the meshing part p located on the positive electrode plate 232a and the meshing part p located on the corresponding negative electrode plate 232b are configured to be able to engage with each other" means that the adjacent positive electrode plate 232a and negative electrode plate 232b are provided with protrusions and depressions on respective side surfaces facing each other, so that an engagement relationship in which they are brought into contact and locked together is formed by cooperation between the protrusions and depressions. "Restricting freedom of the adjacent positive and negative electrode plates 232a and 232b" means that the foregoing engagement relationship allows for a tighter connection between the positive electrode plate 232a and the negative electrode plate 232b, so that when at least one of the adjacent positive electrode plate 232a and negative electrode plate 232b is subjected to external force, a binding force is generated between the adjacent positive electrode plate 232a and negative electrode plate 232b due to the engagement relationship between the adjacent positive electrode plate 232a and negative electrode plate 232b. The direction of the generated binding force can be understood as a direction in which the freedom is restricted. It can also be understood that the direction of the generated binding force is related to the structure of the meshing part p and the direction of the external force. Once the meshing parts p that can be engaged with each other are provided, a relatively fixed relationship is formed at the positions where the meshing parts p are provided. In other words, this relatively fixed relationship can restrict the freedom of the adjacent positive electrode plate 232a and negative electrode plate 232b.

It can be understood that the meshing parts p that can be engaged with each other can be arranged for any adjacent positive electrode plate 232a and negative electrode plate 232b according to the use need, and the specific arrangement form and quantity are not specifically limited in the embodiments of this application.

Therefore, at least one pair of adjacent positive electrode plate 232a and negative electrode plate 232b is provided with meshing parts p on side surfaces facing each other, where the corresponding meshing parts p can be engaged with each other. In this way, when the battery 100 is subjected to external force, the meshing parts p engaged with each other can generate mutual forces between at least one pair of adjacent positive electrode plate 232a and negative electrode plate 232b to bind the positive electrode plate 232a and the negative electrode plate 232b, preventing relative slippage between the positive electrode plate 232a and the negative electrode plate 232b under the influence of the external forces. This can effectively avoid the problem of deteriorating performance of the battery 100 due to misalignment of the positive and negative electrode plates, thus improving the reliability of the battery 100. Moreover, the structure of the meshing parts p allows for more gaps between the adjacent positive electrode plate 232a and negative electrode plate 232b, which can provide more electrolyte storage space and ion channels, effectively solving the problems of slow electrolyte infiltration and insufficient electrolyte retention. During the charge and discharge process of the battery 100, the gaps can also reduce the generated expansion force, avoiding the cycling failure caused by excessive expansion force.

According to some embodiments of this application, optionally, referring still to FIGs. 8 to 10, in a thickness direction δ of the electrode assembly 232, cross-sectional area of the meshing part p gradually decreases along a direction leaving the electrode plate on which the meshing part p is located, from a side surface of the electrode plate on which the meshing part p is located.

A width direction of the cell assembly 23 is also the width direction of the electrode assembly 232, a thickness direction of the cell assembly 23 is also the thickness direction of the electrode assembly 232, and a height direction of the cell assembly 23 is also the height direction of the electrode assembly 232. That is, the width direction of the electrode assembly 232 is also W, the thickness direction of the electrode assembly 232 is also δ, and the height direction of the electrode assembly 232 is also H.

Because the cross-sectional area of the meshing part p gradually decreases, a stress structure similar to a wedge structure can be formed between the meshing parts p that can be engaged with each other. This can further increase the binding force on the corresponding positive electrode plate 232a and negative electrode plate 232b. In this way, it is possible to further prevent the relative slippage between the positive electrode plate 232a and the negative electrode plate 232b under the influence of external forces.

According to some embodiments of this application, optionally, referring still to FIGs. 8 to 10, in a thickness direction δ of the electrode assembly 232, cross-sectional area of the meshing part p linearly decreases along a direction leaving the electrode plate on which the meshing part p is located, from a side surface of the electrode plate on which the meshing part p is located.

Being linearly decreasing means that the cross-sectional area of the meshing part p decreases at a uniform speed along the thickness direction δ of the electrode assembly 232, exhibiting a straight-line decline. In this case, the meshing part p is easy to form, and the engagement structure formed by the meshing parts p engaged with each other can reach a more stable state when subjected to stress. Furthermore, this allows the corresponding positive electrode plate 232a and negative electrode plate 232b to stay in a more stable state under the influence of external forces.

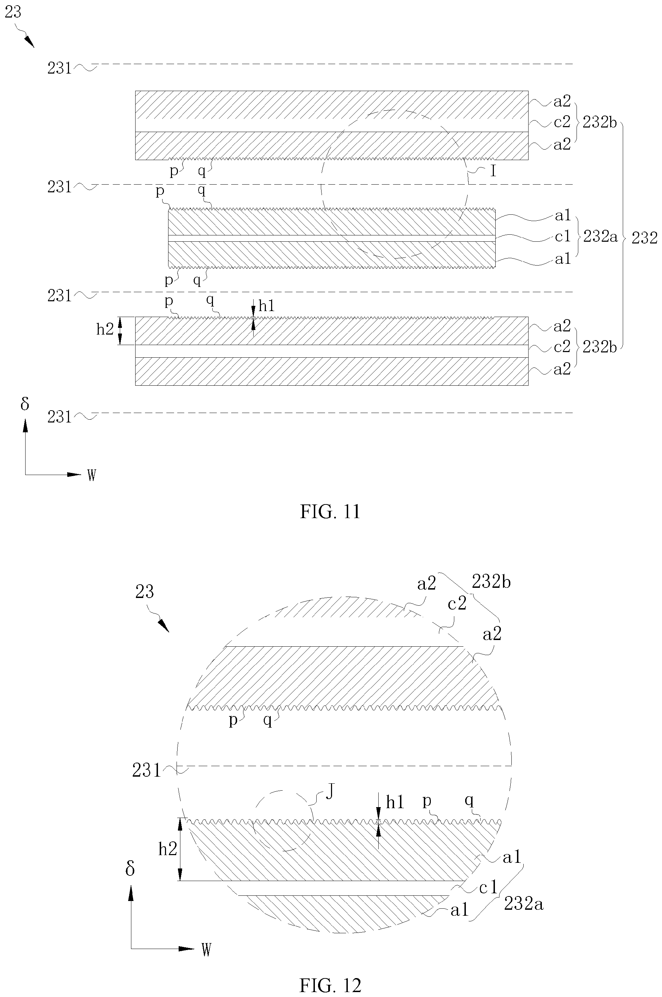

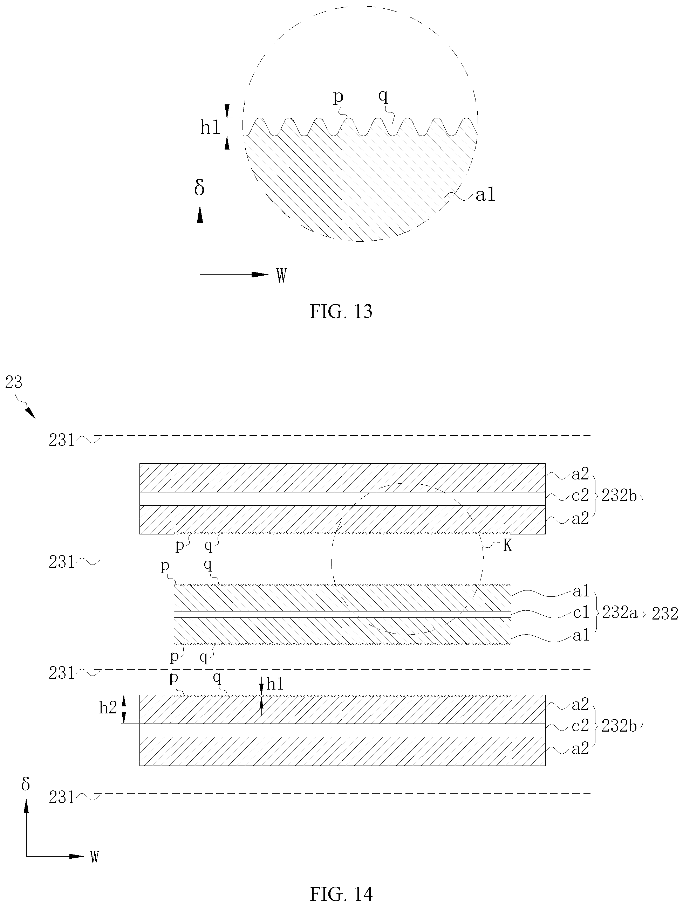

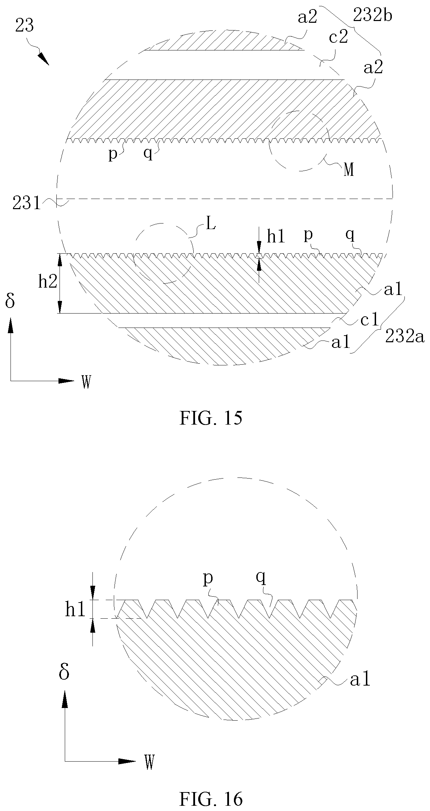

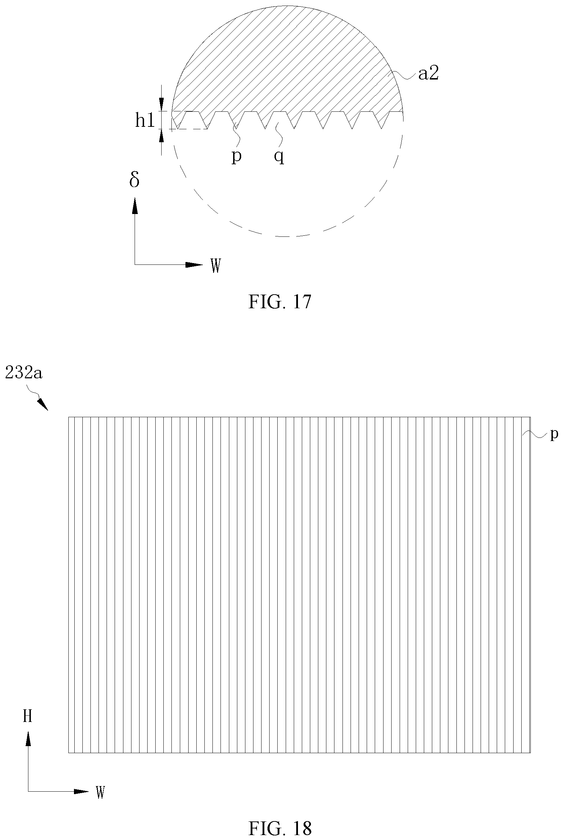

According to some embodiments of this application, optionally, referring still to FIGs. 8 to 10, in the thickness direction δ of the electrode assembly 232, a cross-sectional shape of the meshing part p is triangle. According to some other embodiments of this application, optionally, referring to FIGs. 11 to 13, in the thickness direction δ of the electrode assembly 232, a cross-sectional shape of the meshing part p is arc, where FIG. 11 is a cross-sectional view of FIG. 7 along C-C according to some other embodiments of this application; FIG. 12 is a locally enlarged view of position I in FIG. 11; and FIG. 13 is a locally enlarged view of position J in FIG. 12. According to still some other embodiments of this application, optionally, referring to FIGs. 14 to 17, in the thickness direction δ of the electrode assembly 232, a cross-sectional shape of the meshing part p is trapezoid, where FIG. 14 is a cross-sectional view of FIG. 7 along C-C according to still some other embodiments of this application; FIG. 15 is a locally enlarged view of position K in FIG. 14; FIG. 16 is a locally enlarged view of position L in FIG. 15; and FIG. 17 is a locally enlarged view of position M in FIG. 15.

It should be noted that the shapes of the meshing parts p located on different sides of a same electrode plate may be the same or different. For example, the shapes of the meshing parts p on different sides of the positive electrode plate 232a shown in FIGs. 8, 11, and 14 are the same. For the adjacent positive electrode plate 232a and negative electrode plate 232b, the shapes of the meshing part p located on the positive electrode plate 232a and the meshing part p located on the corresponding negative electrode plate 232b may be the same or different. For example, for the adjacent positive electrode plate 232a and negative electrode plate 232b shown in FIG. 8 and FIG. 11, the shapes of the meshing part p located on the positive electrode plate 232a and the meshing part p located on the corresponding negative electrode plate 232b are the same. For another example, for the adjacent positive electrode plate 232a and negative electrode plate 232b shown in FIGs. 14 to 17, the shapes of the meshing part p located on the positive electrode plate 232a and the meshing part p located on the corresponding negative electrode plate 232b are different. As long as the corresponding meshing parts p can be engaged with each other, no specific limitation is imposed in the embodiments of this application.

In this way, the required engagement structure capable of cooperating with each other can be implemented by designing the structure of the meshing parts p.

According to some embodiments of this application, optionally, the meshing part p is configured to extend in a preset direction, the preset direction being parallel to the width direction W of the electrode assembly 232.

According to some other embodiments of this application, optionally, the meshing part p is configured to extend in a preset direction, the preset direction being parallel to the height direction H of the electrode assembly 232.

According to still other embodiments of this application, optionally, the meshing part p is configured to extend in a preset direction, the preset direction being at an angle with the height direction H of the electrode assembly 232, with the preset direction being not perpendicular to the height direction H of the electrode assembly 232. The angle may be 10°, 20°, 50°, 100°, 120°, or the like. The angle can be set according to the actual use situation, which is not specifically limited in the embodiments of this application.

For example, referring to FIG. 18, FIG. 18 is a schematic structural diagram of a positive electrode plate 232a from one perspective according to some embodiments of this application. FIG. 18 shows that the preset direction is parallel to the height direction H of the electrode assembly 232 and the meshing part p on the positive electrode plate 232a extends along the height direction H of the electrode assembly 232.

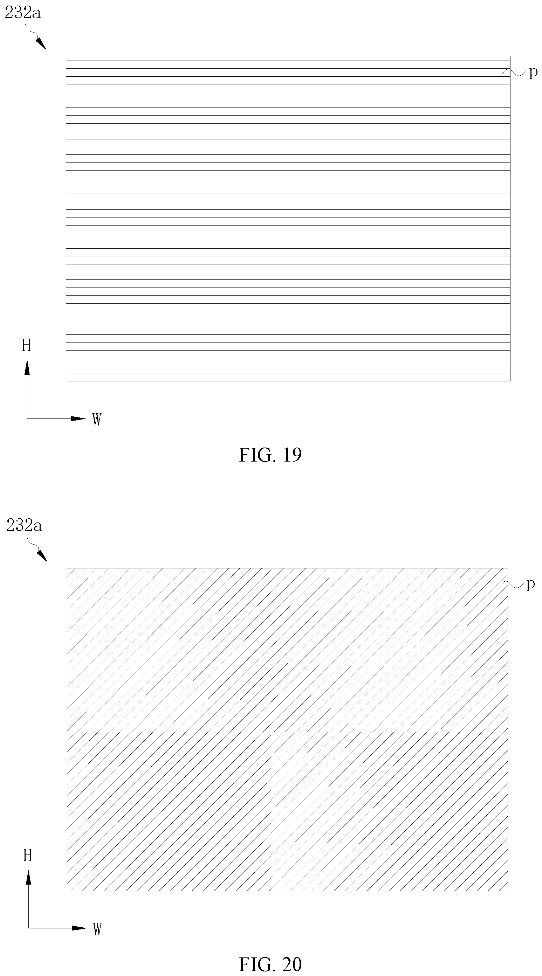

For another example, referring to FIG. 19, FIG. 19 is a schematic structural diagram of a positive electrode plate 232a from one perspective according to some other embodiments of this application. FIG. 19 shows that the preset direction is parallel to the width direction W of the electrode assembly 232 and the meshing part p on the positive electrode plate 232a extends along the width direction W of the electrode assembly 232.

For still another example, referring to FIG. 20, FIG. 20 is a schematic structural diagram of a positive electrode plate 232a from one perspective according to still some other embodiments of this application. FIG. 20 shows that the preset direction is at an angle to the height direction H of the electrode assembly 232 and an extension direction of the meshing part p on the positive electrode plate 232a is at an angle to the height direction H of the electrode assembly 232, with the angle being an acute angle.

Optionally, when the electrode assembly 232 is applied to the cell assembly 23 with a stacked structure shown in FIG. 7, because the stacked structure is bound by the welded positive electrode tab t1 and negative electrode tab t2 in the height direction H, the meshing part p can be constructed to extend along the height direction H of the electrode assembly 232. In this way, the positive electrode plate 232a and the negative electrode plate 232b can be bound in the width direction W of the electrode assembly 232 by the meshing parts p. This can further effectively prevent displacement of the positive electrode plate 232a and negative electrode plate 232b in the width direction W of the electrode assembly 232 under abusive conditions, thus avoiding misalignment.

Therefore, through design of the extension direction of the meshing part p, restriction of the freedom of the adjacent positive electrode plate 232a and negative electrode plate 232b can be adjusted in different directions, so as to obtain the desired extension direction of the meshing part p. In this way, the desired preset direction can be set according to the actual use situation.

According to some embodiments of this application, optionally, multiple meshing parts p are provided on a same surface of a same electrode plate, and all the meshing parts p are arranged discontinuously.

According to some other embodiments of this application, optionally, multiple meshing parts p are provided on a same surface of a same electrode plate, and all the meshing parts p are arranged continuously.

It should be noted that "being arranged continuously" means that all meshing parts p located on a same surface of a same electrode plate are arranged sequentially in the required direction, with the adjacent meshing parts p being connected to each other. In the thickness direction δ of the electrode assembly 232, all the meshing parts p located on a same surface of a same electrode plate have one or more cross-sectional shapes, forming a continuous distribution. "Being arranged discontinuously" means that all meshing parts p located on a same surface of a same electrode plate are arranged sequentially in the required direction, with a gap present between at least one pair of adjacent meshing parts p. In the thickness direction δ of the electrode assembly 232, all the meshing parts p located on a same surface of a same electrode plate have one or more cross-sectional shapes, forming a discontinuous distribution.

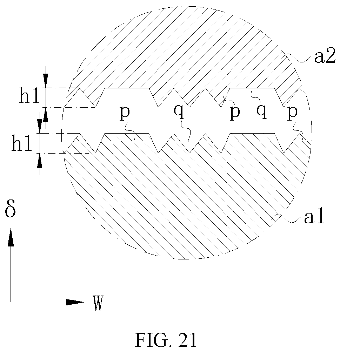

For example, taking FIG. 8 and FIG. 11 as examples, when there are multiple meshing parts p located on a same surface of a same electrode plate, and the cross-sectional shapes of all meshing parts p are the same along the thickness direction δ of the electrode assembly 232, adjacent meshing parts p are connected along the arrangement direction of all the meshing parts p, thus forming a continuous arrangement structure. For another example, taking FIGs. 14 to FIG. 17 as examples, as shown in FIG. 16, the cross-sectional shapes of all meshing parts p on a same surface of the positive electrode plate 232a are trapezoid in the thickness direction δ of the electrode assembly 232, and the adjacent meshing parts p are connected to each other, thus forming a continuous arrangement structure. Correspondingly, the cross-sectional shapes of all meshing parts p on a same surface of the negative electrode plate 232b are triangle in the thickness direction δ of the electrode assembly 232. As shown in FIG. 17, a gap is present between adjacent meshing parts p, thus forming a discontinuous arrangement structure. For still another example, referring to FIG. 21, fig. 21 is a locally enlarged view showing cooperation between a positive electrode plate 232a and a negative electrode plate 232b according to some embodiments of this application (for ease of description, the separating member 231 is omitted, and only the first active layer a1 of the positive electrode plate 232a and the second active layer a2 of the negative electrode plate 232b are shown). The cross-sectional shapes of all meshing parts p on a same surface of the positive electrode plate 232a include triangle and trapezoid in the thickness direction δ of the electrode assembly 232, and the adjacent meshing parts p are connected to each other, thus forming a continuous arrangement structure. Correspondingly, the cross-sectional shapes of all meshing parts p on a same surface of the negative electrode plate 232b are triangle, with some adjacent meshing parts p being connected to each other and some adjacent meshing parts p having a gap between them, thus forming a discontinuous arrangement structure.

According to still some other embodiments of this application, optionally, multiple meshing parts p are provided on a same surface of a same electrode plate, and all the meshing parts p are arranged on a first side f1 of the electrode assembly 232, where the first side f1 is an opposite side of a second side f2, and the second side f2 is a side of the electrode assembly 232 for tab arrangement. In this way, the meshing part p and the tab bind the electrode assembly 232 at different sides of the electrode assembly 232, respectively.

Therefore, through arrangement design of the meshing parts p, the required parts in the electrode assembly 232 can be bound. In this way, the meshing parts p can be arranged in combination with the stress characteristics of the electrode assembly 232 subjected to external forces, so as to further restrict freedom of the required parts.

According to some embodiments of this application, optionally, still referring to FIGs. 8 to 10 in combination with FIGs. 11 and 14, at least one pair of adjacent positive electrode plate 232a and negative electrode plate 232b is provided with multiple recess parts q recessed away from each other on side surfaces facing each other. The meshing part p is formed between adjacent ones of the recess parts q on a same side surface of a same electrode plate.

In this way, with the structural characteristics of the electrode assembly 232, the meshing part p is formed in the form of the recess part Q, which is convenient for manufacturing and molding.

According to some embodiments of this application, optionally, still referring to FIGs. 8 to 10 in combination with FIGs. 11 and 14, at least one pair of adjacent positive electrode plate 232a and negative electrode plate 232b is provided with an active layer on side surfaces facing each other, and the recess parts q are correspondingly formed on the active layer.

In the embodiment of this application, the positive electrode plate 232a includes a first current collector c1 and a first active layer a1, where the first active layer a1 is applied onto at least one side in a thickness direction δ of the first current collector c1 (that is, the thickness direction δ in the figure). The negative electrode plate 232b includes a second current collector c2 and a second active layer a2, where the second active layer a2 is applied onto at least one side in a thickness direction δ of the first current collector c1 (that is, the thickness direction δ in the figure).

The first current collector c1 and the second current collector c2 are components for carrying active substances, with the main function of collecting currents generated by the active substances so as to form a larger current for external output. Therefore, the first current collector c1 and the second current collector c2 should be in full contact with the active substances, and the internal resistance should be as small as possible. Depending on the active substances carried, the first current collector c1 may be an aluminum foil when carrying a positive electrode active substance, and the first current collector c1 may be a copper foil when carrying a negative electrode active substance.

The first current collector c1 and the second current collector c2 may be single-layer members (for example, the first current collector c1 may be an aluminum foil and the first current collector c1 may be a copper foil), or the first current collector c1 and the second current collector c2 may be composite-layer members. When the first current collector c1 and the second current collector c2 are composite-layer members, the first current collector c1 and the second current collector c2 may each include an intermediate layer and two current-collecting metal layers stacked on two sides of the intermediate layer, where the active material is carried on a side of the current-collecting metal layer facing away from the intermediate layer. The intermediate layer may be a polymer support layer, and specifically, may be a polyethylene support layer, a polypropylene support layer, a polymethyl methacrylate support layer, a polystyrene support layer, or the like.

The first active layer a1 is typically obtained by cold pressing after a slurry containing an active material is applied to the first current collector c1. Correspondingly, the second active layer a2 is typically obtained by cold pressing after a slurry containing an active material is applied to the second current collector c2. The active material contained in the first active layer a1 is a positive electrode active material, such as lithium iron phosphate, lithium manganate, lithium cobalt oxide, nickel cobalt manganese ternary material, or lithium nickel cobalt aluminate. The active material contained in the second active layer a2 is a negative electrode active material, such as carbon negative electrode material, tin-based negative electrode material, lithium-containing transition metal nitride negative electrode material, alloy negative electrode material, or nano-scale negative electrode material.

The first active layer a1 may be applied to both sides of the first current collector c1 in the thickness direction δ, and the polarities of the first active layers a1 on the two sides may be the same or different. Typically, the two first active layers a1 applied to the two sides of the first current collector c1 in the thickness direction δ have opposite polarities, one as a positive electrode active layer and the other as a negative electrode active layer. Correspondingly, the second active layer a2 may be applied to both sides of the second current collector c2 in the thickness direction δ, and the polarities of the second active layers a2 on the two sides may be the same or different. For the outermost negative electrode plate 232b, a side of the second current collector c2 facing the adjacent positive electrode plate 232a is coated with the second active layer a2.

In a case of forming the recess part q on the active layer, the recess part q can be made on the active layer by etching after the corresponding active layer is formed by cold-pressing the corresponding current collector coated with a slurry containing an active material. In this way, the desired meshing part p can be formed. Certainly, the desired meshing part p can alternatively be directly formed by coating or cold pressing. For example, the desired meshing part p can be obtained by controlling a recess depth h1 of a cold-pressing roller. The manner can be selected according to the actual use situation, which is not specifically limited in the embodiments of this application. Optionally, the desired meshing part p can be obtained by cold pressing and then etching, making the shaping of the meshing part p easy to control.

As such, forming the recess part q on the active layer not only prevents damage to the current collector in the electrode assembly 232, reducing the risk of fracture of the electrode assembly 232, but also avoids a difference in compaction density, thus avoiding adverse effect on cell performance. On this basis, this method can prevent reducing the cold-pressed thickness h2 of the electrode plate, thus avoiding decreases in cell capacity and energy density.

According to some embodiments of this application, optionally, still referring to FIGs. 9, 12, and 15, the recess depth h1 of the recess part q and the thickness h2 of the active layer satisfy the condition that a ratio of h1 to h2 is approximately 0.03 to approximately 0.1.

This prevents the recess depth h1 from being too large to meet the requirement of lithium intercalation, thus avoiding lithium precipitation. This also prevents the recess depth h1 being too small to achieve effective engagement between the corresponding meshing parts p, so that when subjected to external force, the engagement structure formed by the mating meshing parts p can generate a more effective binding force on the corresponding positive electrode plate 232a and negative electrode plate 232b.

According to some embodiments of this application, optionally, the meshing part p on the positive electrode plate 232a is in clearance fit with the meshing part p on the corresponding negative electrode plate 232b.

This can prevent extrusion between the corresponding positive electrode plate 232a and negative electrode plate 232b caused by interference fit, thus reducing the risk of fracture.

According to some embodiments of this application, optionally, an assembly clearance between the meshing part p on the positive electrode plate 232a and the meshing part p on the corresponding negative electrode plate 232b is less than or equal to approximately 30 microns.

This can prevent the lithium ion migration path from being too long during subsequent use of the battery 100 caused by an excessively large gap, so that the lithium ions deintercalated from the positive electrode plate 232a can be successfully intercalated into the negative electrode plate 232b, avoiding lithium precipitation at the negative electrode plate 232b.

According to some embodiments of this application, this application further provides a battery cell 20 including a housing 22 and a cell assembly 23 accommodated in the housing 22. As shown in FIG. 7, with reference to FIG. 8, the cell assembly 23 includes a separating member 231 and the electrode assembly 232 described in any one of the above solutions, where the separating member 231 is disposed between a positive electrode plate 232a and a negative electrode plate 232b. Because the battery cell 20 includes the foregoing electrode assembly 232, it has all the beneficial effects mentioned above. Details are not repeated herein.

According to some embodiments of this application, optionally, a ratio of capacity per unit area of the negative electrode plate 232b to capacity per unit area of the positive electrode plate 232a is greater than or equal to approximately 1.

When the ratio of the capacity per unit area of the negative electrode plate 232b to the capacity per unit area of the positive electrode plate 232a is greater than or equal to approximately 1, the ratio of the number of lithium ions that can be intercalated into the negative electrode plate 232b to the number of lithium ions that can be deintercalated from the positive electrode plate 232a is greater than or equal to approximately 1.

During the charge process, lithium in the positive electrode plate 232a is ionized to form lithium ions. After entering the electrolyte, the lithium ions are intercalated into the negative electrode plate 232b after passing through the separating member 231, or precipitate on the surface of the negative electrode plate 232b if they cannot be successfully intercalated into the negative electrode plate 232b. Specifically, the ratio of the capacity per unit area of the negative electrode plate 232b to the capacity per unit area of the positive electrode plate 232a may be 1, 2, or 3, so that the material usage for the negative electrode plate 232b is more appropriate, which can reduce costs.

In this case, it can be ensured that lithium ions deintercalated from the positive electrode plate 232a can be successfully intercalated into the negative electrode plate 232b, preventing lithium precipitation at the negative electrode plate 232b.

According to some embodiments of this application, optionally, the cell assembly 23 is of a wound structure. According to some embodiments of this application, optionally, the cell assembly 23 is of a stacked structure. This allows selection of the cell assembly 23 of a wound structure or the cell assembly 23 of a stacked structure according to the use requirements.

According to some embodiments of this application, this application further provides a battery 100 including the battery cell 20 described in any one of the foregoing solutions. Because the battery 100 includes the foregoing electrode assembly 232, it has all the beneficial effects mentioned above. Details are not repeated herein.

According to some embodiments of this application, this application further provides an electric apparatus including the battery 100 described in any one of the foregoing solutions, where the battery 100 is configured to supply electrical energy to the electric apparatus.

The electric apparatus may be any one of the foregoing devices or systems that use the battery 100.

To sum up, in the electrode assembly 232 provided in this application, effective engagement can be formed between the shaped positive electrode plate 232a and negative electrode plate 232b having the meshing parts p, creating effective support between the adjacent positive electrode plate 232a and negative electrode plate 232b. In this way, freedom between the adjacent positive electrode plate 232a and negative electrode plate 232b can be restricted when subjected to external force, preventing relative movement between the positive electrode plate 232a and the negative electrode plate 232b and reducing the risk of misalignment. In addition, because the structure of the meshing parts p can be designed, more gaps are generated between the adjacent positive electrode plate 232a and negative electrode plate 232b, so that more electrolyte storage space and ion channels can be provided, effectively solving the problems of slow electrolyte infiltration and insufficient electrolyte retention. During the charge and discharge process of the battery 100, the gaps can also reduce the generated expansion force, avoiding the cycling failure caused by excessive expansion force. Therefore, for the battery 100 using the electrode assembly 232, the reliability of the battery 100 is improved.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electrode assembly, comprising a positive electrode plate and a negative electrode plate arranged alternately;
wherein at least one pair of adjacent positive electrode plate and negative electrode plate is provided with meshing parts on their side surfaces facing each other;
the meshing part on the positive electrode plate and the meshing part on the corresponding negative electrode plate are configured to be able to engage with each other to restrict freedom of the adjacent positive electrode plate and negative electrode plate; and
the meshing part on the positive electrode plate and the meshing part on the corresponding negative electrode plate are configured to extend in a preset direction, wherein the preset direction is any one of the following: the preset direction being parallel to a height direction of the electrode assembly, and the preset direction being at an angle with respect to the height direction of the electrode assembly, with the preset direction being not perpendicular to the height direction of the electrode assembly.

2. The electrode assembly according to claim 1, wherein in a thickness direction of the electrode assembly, cross-sectional area of the meshing part gradually decreases along a direction leaving the electrode plate on which the meshing part is located, from a side surface of the electrode plate on which the meshing part is located.

3. The electrode assembly according to claim 2, wherein in the thickness direction of the electrode assembly, the cross-sectional area of the meshing part linearly decreases along the direction leaving the electrode plate on which the meshing part is located, from the side surface of the electrode plate on which the meshing part is located.

4. The electrode assembly according to claim 2, wherein in the thickness direction of the electrode assembly, a cross-sectional shape of the meshing part is one of triangle, trapezoid, and arc.

5. The electrode assembly according to any one of claims 1 to 4, wherein multiple meshing parts are provided on a same surface of a same electrode plate, and all the meshing parts are arranged continuously.

6. The electrode assembly according to any one of claims 1 to 4, wherein multiple meshing parts are provided on a same surface of a same electrode plate, and all the meshing parts are arranged discontinuously.

7. The electrode assembly according to any one of claims 1 to 4, wherein multiple meshing parts are provided on a same surface of a same electrode plate, and all the meshing parts are arranged on a side of the electrode assembly opposite a side for tab arrangement.

8. The electrode assembly according to any one of claims 1 to 4, wherein at least one pair of adjacent positive electrode plate and negative electrode plate is provided with multiple recess parts recessed away from each other on their side surfaces facing each other; and
the meshing part is formed between adjacent ones of the recess parts on a same side surface of a same electrode plate.

9. The electrode assembly according to claim 8, wherein at least one pair of adjacent positive electrode plate and negative electrode plate is provided with active layers on their side surfaces facing each other; and
the recess parts are correspondingly formed on the active layers.

10. The electrode assembly according to claim 9, wherein a ratio of a recess depth of the recess part to a thickness of the active layer is approximately 0.03 to approximately 0.1.

11. The electrode assembly according to any one of claims 1 to 4, wherein the meshing part on the positive electrode plate is in clearance fit with the meshing part on the corresponding negative electrode plate.

12. The electrode assembly according to claim 11, wherein an assembly clearance between the meshing part on the positive electrode plate and the meshing part on the corresponding negative electrode plate is less than or equal to approximately 30 microns.

13. A battery cell, comprising:
a housing; and
a cell assembly accommodated in the housing, wherein the cell assembly comprises a separating member and the electrode assembly according to any one of claims 1 to 10, the separating member disposed between the positive electrode plate and the negative electrode plate.

14. The battery cell according to claim 13, wherein a ratio of capacity per unit area of the negative electrode plate to capacity per unit area of the positive electrode plate is greater than or equal to approximately 1.

15. The battery cell according to claim 13, wherein the cell assembly is of a wound structure.

16. The battery cell according to claim 13, wherein the cell assembly is of a stacked structure.

17. A battery, comprising the battery cell according to any one of claims 13 to 16.

18. An electric apparatus, comprising the battery according to claim 17, wherein the battery is configured to supply electrical energy.
